# FASCICULE DE BREVET EUROPEEN

(11) **EP 2 561 343 B1**
(45) Date de publication et mention de la délivrance du brevet: **29.11.2017**
(21) Numéro de dépôt: 10751844.1
(22) Date de dépôt: 12.08.2010
(51) Int. Cl.: G01N 29/24, G01N 29/04, B23K 11/00, B23K 11/25, B23K 37/04

(54) **METHODE ET INSTALLATION D'INSPECTION ULTRASONORE DE SOUDURE DE RABOUTAGE DE DEUX EXTREMITES TRANSVERSALES DE DEUX BANDES METALLIQUES**
VERFAHREN UND VORRICHTUNG ZUR ULTRASCHALLINSPEKTION EINER STUMPFSCHWEISSNAHT DER QUERSEITEN ZWEIER METALLBLECHE
METHOD AND APPARATUS FOR ULTRASONIC INSPECTION OF A BUTT WELD OF THE TRANSVERSAL SIDES OF TWO METAL SHEETS

(30) Priorité: 23.04.2010 EP 10290219
(43) Date de publication de la demande: 27.02.2013
(73) Titulaire: Primetals Technologies France SAS, 42600 Savigneux (FR)
(72) Inventeur: MICHAUT, Marc, 42152 L'Horme (FR)
(74) Mandataire: Metals@Linz
(86) Numéro de dépôt international: PCT/EP2010/061783
(87) Numéro de publication internationale: WO 2011/131252

(56) Documents cités:
- EP-A1- 0 845 309
- EP-A1- 2 039 458
- US-A1- 2008 072 674
- MI BAO ET AL: "Three-dimensional ray tracing of laser ultrasound for weld penetration sensing", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 115, no. 4, 1 avril 2004 (2004-04-01) , pages 1565-1571, XP012072214, ISSN: 0001-4966, DOI: DOI:10.1121/1.1649942
- KOPYLOW C. ET AL.: "Laser Ultrasound - A flexible tool for the inspection of complex CFK-components and welded seams", PROCEEDINGS OF SPIE, PO BOX 10 BELLINGHAM WA 98227-0010 USA, vol. 6616, 2007, pages 66163J-1-66163J-12, XP040242519,

## Description

La présente invention concerne une méthode d'inspection de soudure de raboutage de deux extrémités transversales de deux bandes métalliques selon le préambule de la revendication 1, ainsi qu'une installation à cet effet selon le préambule de la revendication 10. L'invention se rapporte au raboutage de bandes métalliques, en particulier d'acier, au cours de leur défilement dans une installation de transformation par laminage, décapage, revêtement, etc., ci-après nommée de manière générique « installation de transformation ». Elle concerne particulièrement le contrôle non destructif de soudures de raboutage.

En vue d'améliorer la productivité des installations de laminage à froid et de traitement des bandes d'acier en évitant leur transformation bobine après bobine, les installations modernes de forte capacité procèdent selon un fonctionnement continu par raboutage des bandes successives les unes aux autres, la queue d'une bande en fin de traitement étant raccordée à la tête d'une nouvelle bande.

Durant cette opération de raboutage, le déplacement de deux extrémités avoisinées de bandes à souder est arrêté et les sections aval de l'installation de transformation sont alimentées par un dispositif d'accumulation de bande préalablement rempli entre deux soudures successives.

Cette technique est bien connue de l'homme de métier dont les efforts vont porter sur la rapidité de l'opération de raboutage afin de limiter le temps d'arrêt des extrémités de bande et, par voie de conséquence, la capacité et le coût des dispositifs d'accumulation. Ses efforts porteront aussi sur la nécessité de réaliser des soudures saines et résistantes qui ne risquent pas de se rompre dans l'installation de transformation ou d'endommager certaines parties de celle-ci lors de leur défilement dans les différentes machines qui la composent.

L'opération de raboutage est réalisée par une soudeuse qui comporte, en plus du dispositif de soudage proprement dit (en bout par étincelage, par résistance à la molette, TIG, MIG, laser, laser hybride) deux mors de serrage, chacun d'entre eux étant destiné à immobiliser une des bandes ou tôles bobinées (ou du moins débobinables), l'un situé en aval dans le sens de défilement de la bande et destiné à immobiliser la queue de la bobine engagée dans la ligne, l'autre en amont destiné à immobiliser la tête de la bobine que l'on vient d'introduire.

Ce type de soudeuse doit être capable de produire du premier coup des soudures de haute qualité. En effet, la rupture d'une soudure en cours de défilement de la bande dans l'installation ou même la nécessité de refaire une soudure jugée incorrecte peuvent entrainer des pertes de production importantes. Les éléments décisifs de la qualité d'une soudure sont indissociablement multiples et reposent essentiellement sur les critères suivants :
- La qualité métallurgique du joint soudé, particulièrement pour les aciers susceptibles d'altérations métallurgiques de la zone affectée thermiquement,
- La section soudée qui devrait idéalement être exempte de surépaisseur et de sous-épaisseur,
- La continuité et la compacité du joint soudé.

La qualité métallurgique dépend du procédé utilisé et du cycle thermique qu'il induit dans la zone affectée, ainsi que de divers traitements de pré et post-chauffage ou de recuit pratiqués localement dans la soudeuse elle-même ou immédiatement en aval.

La section soudée dépend du procédé et des moyens de parachèvement mis en oeuvre après soudage. Le soudage en bout par étincelage produit un bourrelet qu'il est nécessaire de raboter et les soudeuses dites « flash-butt » sont généralement équipées d'une unité intégrée de rabotage. Le soudage par résistance à la molette produit également une surépaisseur due au recouvrement des tôles à souder et qui doit le plus souvent être écrasée par des dispositifs à galets intégrés aux soudeuses. Le soudage par laser permet une gestion fine de la section soudée associée par ailleurs à une zone affectée par la chaleur très limitée.

La continuité et la compacité du joint dépendent essentiellement des paramètres de soudage utilisés. Ces paramètres sont pour l'essentiel électriques et sont généralement facile à gérer de manière fiable.

Un autre paramètre occupe toutefois une place primordiale tant en ce qui concerne la continuité et la compacité du joint que sa section, il s'agit de la rectitude des bords à souder et leur positionnement relatif pendant le soudage.

Afin de garantir la qualité de la soudure de raboutage, il est nécessaire que les extrémités de bandes à souder soient parfaitement alignées et rectilignes. Pour cela, les soudeuses comportent généralement deux mors de serrage destinés à immobiliser les tôles, l'un, situé en aval dans le sens de défilement de la bande est destiné à immobiliser la queue de la bande appartenant à la bobine qui a été introduite dans la ligne, l'autre, en amont, est destiné à immobiliser la tête de la bande appartenant à la bobine que l'on vient d'introduire pour la raccorder à la précédente. Les extrémités de bandes sont donc immobilisées dans les mors de serrage en dépassant de ceux-ci d'un porte-à-faux résultant de leur cisaillage précis et propre réalisé grâce à des cisailles intégrées à la soudeuse ou à un faisceau laser. Ce porte-à-faux doit être aussi faible que possible le long des extrémités avoisinées à souder afin de bien maintenir ces dernières correctement alignées et avec un jeu ou une absence de jeu maitrisé.

Malgré toutes les dispositions prises pour que toutes les conditions géométriques, métallurgiques et de paramètres de soudage soient réunies, il arrive que certaines soudures présentent des défauts pouvant engendrer une rupture au cours de défilement dans l'installation de transformation. Un tel incident peut avoir des conséquences lourdes, en particulier si la rupture se produit dans un four de recuit continu ou de galvanisation. L'installation peut alors être arrêtée pendant plusieurs jours avant de rétablir la continuité de la bande.

D'autres défauts ou imperfections ont des conséquences beaucoup plus légères, comme une surépaisseur trop importante qui imposera par exemple l'ouverture des cylindres d'un laminoir de type « skin-pass » et la perte de plusieurs mètres de bande qui ne seront pas « skin-passés » en amont et en aval de la soudure. La multiplication d'incidents de ce type peut alors diminuer fortement la mise au mille des bobines transformées dans l'installation de transformation. Il est donc particulièrement important qu'avant de laisser la soudure sortir de la machine à souder pour traverser l'installation, l'opérateur puisse avoir un niveau de confiance suffisant dans la qualité de ladite soudure.

Pour cela, il est procédé dans la majorité des installations à un examen visuel de la soudure, parfois assisté par une caméra. La vigilance et l'expérience de l'opérateur restent décisives dans ce processus de décision qui est très généralement conservatif et conduit à des ressoudages pas toujours justifiés.

Dans certains cas, il est fait appel à la thermométrie et à des caméras travaillant dans le domaine des rayons infrarouges. Il s'agit là d'une avancée certaine d'autant que les installations les plus sophistiquées disposent de systèmes de traitement d'image. Il reste que ces dispositifs sont généralement disposés au dessus de la face supérieure de la bande et de la soudure à contrôler, la face inférieure étant très peu accessible dans une machine de soudage.

Dans d'autres cas encore, il n'est procédé qu'à une comparaison de seuls paramètres électriques et de déplacement réalisés avec ceux programmés, sensés garantir une soudure correcte.

Jusqu'alors, seuls ces moyens sont donc utilisés pour inspecter ce type de soudures et aucun ne permet de juger de la présence ou de la nocivité de défauts internes en particulier liés à la structure interne du complexe « bande-soudure-bande », c'est-à-dire de la zone fondue des bords à souder (et d'un éventuel métal d'apport) qui assure la jonction desdits bords à souder et les zones adjacentes non fondues dites « affectées thermiquement » et qui sont le siège de transformations métallurgiques diverses, ou même de défauts débouchant très discrets comme des fissures ou des manques de fusion dont le plan principal est substantiellement parallèle aux rayons lumineux captés par l'opérateur ou les caméras qui l'assistent.

De plus, comme évoqué auparavant, l'espacement imposé pour minimiser le porte-à-faux des extrémités tenues dans les mors doit rester faible et ce fait empêche de pouvoir accéder à une visibilité correcte de la soudure ainsi qu'à une mesure thermométrique/électrique aisée. Enfin, encore selon ces faits, si le contrôle de soudure n'est pas exécuté alors que les extrémités sont encore tenues dans les mors, et si l'inspection doit avoir lieu après libération des mors de leur position de maintien des bandes, et en cas de détection de défaut selon l'état de l'art, il faudra inévitablement réinsérer et repositionner la bande dans la soudeuse afin de recouper et recommencer l'opération de soudage avec tous les inconvénients que cela comporte. Le document US2008/0072674 A1 concerne une méthode d'inspection de soudure de raboutage de deux extrémités transversales de deux bandes métalliques par des ondes ultrasonores, en particulier pour mesurer la profondeur d'une soudure. Un but de la présente invention est de proposer une méthode d'inspection de soudure de raboutage de deux extrémités transversales de deux bandes métalliques avant que celles-ci ne soient libérées de leur emprise étroite dans des mors de serrage utilisés pendant le soudage, ladite méthode permettant en particulier une inspection de défauts externes et internes liées à la structure « bande-soudure-bande ». Afin de mettre cette méthode en oeuvre, un autre but de l'invention est de fournir une installation adéquate.

Une méthode d'inspection ainsi qu'une installation permettant sa mise en oeuvre sont ainsi présentées au travers des revendications 1 et 10. L'invention propose donc une méthode d'inspection de soudure de raboutage de deux extrémités transversales de deux bandes selon la revendication 1. En d'autres termes, la méthode selon l'invention convient à un contrôle non destructif de soudures de raboutage de deux extrémités de bobines de bandes d'acier dans une installation de laminage ou de transformation dans laquelle la fin d'une bande déroulée dans la dite installation est stoppée entre les mors dits « de sortie » d'une machine de soudage pendant que la tête d'une nouvelle bande est amenée entre les mors dits « d'entrée » de la même machine de soudage, les deux extrémités de bandes ainsi serrées dans les mors sont découpées en vue de présenter des caractéristiques géométriques adaptées au soudage, transportées par rapprochement des mors jusqu'à une position de soudage puis soudées entre elles par un procédé adapté tel que le soudage par faisceau laser, au plasma, à l'arc électrique, par résistance à la molette, en bout par étincelage.

La méthode selon l'invention est caractérisée par le fait que les dispositifs d'émission (ou de génération) et de réception des ondes ultrasonores doivent pouvoir être disposés dans l'espace très réduit existant entre les mors de la machine de soudage, c'est-à-dire par exemple pour une machine de soudage laser un espace pouvant être inférieur à 10 mm dans le sens transversal à la soudure. Ils doivent aussi permettre un déplacement rapide sans problèmes de couplage avec la bande et résister à un environnement pouvant être chaud lorsque, par exemple, les dits dispositifs de maintien du premier et deuxième canal suivent immédiatement une tête de soudage laser.

Dans cet espace réduit compris entre les mors de la machine de soudage, la méthode selon l'invention peut garantir que :
- Des ondes ultrasonores sont générées en sortie du premier canal sur une surface de bande, ladite sortie se déplaçant sans contact au dessus d'une des deux extrémités de bandes, parallèlement à la soudure, et sur toute la longueur de celle-ci.
- Les ondes ultrasonores ainsi générées traversent la soudure de raboutage et sont captées par un récepteur via le deuxième canal dont une entrée collectrice d'ondes (optiques) se déplace sans contact au dessus de l'autre extrémité de bande, parallèlement à la soudure et sur toute la longueur de celle-ci, selon un parcours parallèle et synchrone à celui de l'émetteur.

- Les ondes ultrasonores captées par le récepteur sont analysées par un dispositif d'analyse apte à identifier au moins une donnée caractéristique du transfert d'ondes entre l'émetteur et le récepteur, telle qu'une atténuation, un temps de parcours ou une transformation des ondes.
- Les caractéristiques du transfert d'ondes sont comparées à une bibliothèque d'anomalies de transfert auxquelles sont associées des types de défauts des soudures.
- A partir du type de défaut identifié et de son étendue sur la longueur de la soudure, le système d'analyse quantifie ainsi un degré de gravité du défaut.

En particulier, les premier et deuxième canaux comportent un guidage optique de faible section suffisante pour permettre une incidence ponctuelle ou une émergence ponctuellement captable au bord de la soudure et sur un côté de chaque bande. L'expérience montre qu'au moins une fibre optique ou collimateur d'ondes à section inférieure à environ 10mm sont appropriés pour réaliser lesdits canaux de transport des ondes dans un domaine spectral optique. De ce fait, le porte-à-faux évoqué dans la partie introductive de l'invention peut rester très faible sachant que l'espacement pour offrir un interstice suffisant entre les mors reste aussi dans la pratique le même que celui usuellement imposé pour le bon maintien des extrémités hors du cadre de l'invention. Ainsi, une inspection est possible sans que les mors ne doivent être écartés ou, autrement dit, que les extrémités de bandes ne soient libérées des mors.

Par le biais d'un guidage d'ondes optiques et ultrasonores sous forme des trois canaux précédemment évoqués, les ondes optiques incidentes provenant du premier canal génèrent des ondes ultrasonores qui se propagent dans le troisième canal, c'est-à-dire dans une partie de la première bande, au travers de la soudure et enfin dans une partie de la deuxième bande afin de pouvoir finalement émerger dans le deuxième canal (sous forme d'ondes ultrasonores puis de vibrations de surface optiquement détectables), ledit deuxième canal étant prévu pour engager l'étape d'analyse des ondes émergentes hors de la deuxième bande.

Ces ondes ultrasonores subissent des modifications de leur propriétés physiques par leur propagation tant en superficie de la structure bande-soudure-bande qu'en volume de cette structure, matérialisant ainsi ledit troisième canal. Ainsi, elles transportent au moins une caractéristique d'inspection de la soudure qui peut donc être identifiée selon des critères prédéfinis, par exemple par une classification préalable de type de modifications d'ondes analysées selon une soudure idéale ou une soudure comportant un ou plusieurs défaut typiquement reconnaissables selon une signature répertoriée d'un signal d'ondes en sortie du deuxième canal. Le principe physique de génération desdites ondes ultrasonores est aussi connu sous le nom de technique « ultrasons-laser », mais l'invention s'affranchira de développer plus sa théorie. Bien plus, l'invention focalise son objet sur une méthode d'inspection en position de soudage qui permet d'utiliser ce principe physique en le mettant en oeuvre sous une séquence d'étapes innovantes imposées par un cycle de soudage et permettant une analyse finale efficace et instantanée de la structure complexe bande-soudure-bande, idéalement sous une analyse de signature mesurée sur un état vibratoire des ondes ultrasonores impliquant un défaut de soudure, laquelle signature mesurée pouvant être comparée et identifiée à des signatures de défauts types répertoriées dans une banque de données. L'analyse par comparaison de signatures mesurées/répertoriées est donc simple et rapide, car ne nécessite pas de connaissances complexes ou du moins de devoir mettre en oeuvre des algorithmes d'extraction de propriétés physiques complexes du comportement propagatoire d'ondes ultrasonores dans une structure bande-soudure-bande également fort complexe pour des cas de défauts divers.

Des caractéristiques d'inspection de la soudure peuvent aussi par exemple être déduites par une mesure d'atténuation, de temps de parcours ou de transformation d'ondes par la mesure d'ondes via le deuxième canal. Selon les caractéristiques ou du moins les signatures extraites d'inspection de la soudure, des alarmes sont générées afin de signaler immédiatement un défaut potentiel.

La méthode selon l'invention prévoit que les impulsions sont émises par un émetteur laser couplé en entrée du premier du canal et les ondes du deuxième canal sont captées par un récepteur couplé en sortie du deuxième canal ;
- une sortie du premier canal et une entrée du deuxième canal sont chariotées le long de l'espacement au dessus ou au travers de l'interstice entre les deux mors en restant sans contact avec la bande, de façon à extraire les caractéristiques ou signatures d'inspection de soudage sous deux configurations :
- de façon synchrone et sous un intervalle de temps le plus bref par rapport à un dispositif de soudage lui-même porté par un mécanisme charioté le long de l'espacement entre les deux mors.
- de façon postérieure à la réalisation de la soudure complète des extrémités de chaque bande.
Le chariotage de la sortie du premier canal et de l'entrée du deuxième canal permet donc une inspection durant le soudage comme après le soudage le long des extrémités de bandes sans nécessité que la structure « bande-soudure-bande » soit déplacée relativement au déplacement de chariotage.

Selon le procédé de soudage mis en oeuvre, le déplacement sans contact de la sortie du premier canal et de l'entrée du deuxième canal au dessus des deux extrémités de bandes dans l'interstice prévu, parallèlement à la soudure, et sur toute la longueur de celle-ci peut être réalisé :
- en même temps que la soudure et à la même vitesse dans le cas de procédés de soudage progressifs comme le soudage par résistance à la molette, TIG, MIG, Laser ou laser hybride. Dans ce cas, la sortie du premier canal et de l'entrée du deuxième canal sont disposés derrière la tête de soudage, sur un même dispositif de déplacement que celle-ci ou sur un dispositif de déplacement séparé de celle-ci mais synchrone avec celui de ladite tête de soudage.
- postérieurement à la réalisation de la soudure complète dans le cas du procédé de soudage en bout par étincelage.

La méthode peut aussi être mise en oeuvre selon au moins un des modes suivants :
- Un mode d'apprentissage impliquant systématiquement un expert qui confirme ou modifie une identification et une quantification de défaut de soudure (reconnaissance de signature type d'un défaut) ;
- Un mode automatique dans lequel l'étape d'analyse liée aux caractéristiques d'inspection de la soudure assure autonomement une identification et une quantification d'au moins un défaut de soudure (par reconnaissance suffisante d'une signature dudit défaut) et délivre sous une tolérance prédéfinie au moins une alarme à un opérateur ;
- Un mode semi-automatique dans lequel, sous le précédent mode automatique, si des caractéristiques/signatures de transfert d'ondes ultrasonores sont sujettes à être insuffisamment identifiables, une requête de décision sur l'inspection additionnelle est envoyée auprès d'un opérateur.

Complémentairement, la méthode selon l'invention peut être mise en oeuvre selon au moins un des modes suivants :
- Un mode d'apprentissage impliquant systématiquement un expert qui, à partir d'une identification et d'une quantification d'un défaut de soudage, corrige des paramètres de soudage pertinents, tels que la vitesse de déplacement d'une tête de soudage ou une énergie de soudage afin de corriger ledit défaut ;
- Un mode automatique dans lequel l'étape d'analyse liée aux caractéristiques/signatures d'inspection de la soudure assure autonomement une correction de paramètres de soudage à partir d'une identification et d'une quantification de défaut de soudage ;
- Un mode semi-automatique dans lequel, sous le précédent mode automatique, l'étape d'analyse émet une requête de correction de paramètres de soudage à un opérateur à partir de l'identification et la quantification de défaut de soudage.

Ces mises en oeuvre de la méthode selon l'invention présentent donc une haute flexibilité d'inspection qui permet de lever tout doute de défaut de soudure aussi très tôt, c'est-à-dire flexiblement pendant ou/et après le soudage, et surtout avant que la bande ne quitte sa position de soudage vers d'autres étapes de traitement où un défaut de soudure porterait préjudice.

La méthode selon l'invention prévoit en particulier qu'en vue d'étapes d'analyse à postériori d'une étape d'inspection, des défauts identifiés et quantifiés soient enregistrés dans une base de données, sous forme de signatures répertoriées communément et pour chaque soudure défectueuse, avec des paramètres de soudage mis en oeuvre et des données concernant les bandes soudées. De cette façon, l'étape d'analyse permet une inspection plus affinée selon des situations et paramétrages complexes et évolutifs de soudage de bandes, en vue d'obtenir un maximum de données permettant l'analyse à postériori des défauts identifiés et quantifiés. Des analyses hors ligne peuvent alors être conduites afin d'étudier statistiquement les conditions d'occurrence des défauts et d'améliorer les paramètres de soudage.

La méthode selon l'invention permet d'autre part que les ondes ultrasonores sur la surface de la première bande (en sortie de premier canal) soient générées par un laser à impulsions (couplé en entrée du premier canal) étant mis sous au moins un des deux régimes suivants :
- un régime thermo élastique ;
- un régime thermo élastique alterné par un régime par ablation, ladite alternance étant en particulier déterminée par l'étape d'analyse, en cas d'anomalie ou de doute sur une alerte, en vue d'un éventuel complément d'analyse des caractéristiques liées à un transfert d'ondes. Sous deux régimes alternés, il est ainsi avantageusement possible d'obtenir deux signatures d'états vibratoires alternés des ondes ultrasonores transitant par la structure bande-soudure-bande, ce qui rend l'inspection plus fiable, particulièrement en cas de doute sur une des deux signatures mesurées. De cette façon, des alertes superflues peuvent être évitées et l'inspection de soudure est donc plus robuste contre des artefacts de mesure.

En effet, afin de pouvoir être disposés dans l'espace très réduit existant entre les mors de la machine de soudage et de permettre un déplacement rapide sans problèmes de couplage avec la bande, le dispositif d'émission des ondes ultrasonores est un laser pulsé générant à la surface de la bande un ébranlement ultrasonore en régime dit « thermo élastique », c'est-à-dire sans fusion. Ce régime thermo élastique est favorable à la génération d'ondes de surface ou de Lamb, c'est-à-dire se propageant substantiellement parallèlement à la surface de la bande.

En variante, les ondes ultrasonores sont générées selon une alternance de régime thermo élastique et de régime « par ablation ». Le régime par ablation implique une fusion très localisée sous l'impact du faisceau et favorise la génération d'ondes de volume longitudinales, c'est-à-dire se propageant substantiellement perpendiculairement à la surface de la bande.

La nature différente des ondes ultrasonores générées par l'émetteur laser conduit, devant une même soudure, à des caractéristiques du transfert d'ondes très différentes. Pour certains types d'anomalies de transfert d'ondes identifiés, le dispositif d'analyse peut requérir la modification des paramètres de tir laser (puissance et / durée) afin d'intercaler entre les impulsions en régime thermo élastique des impulsions en régime d'ablation. La double « signature » du défaut de soudure permet alors un diagnostic plus fiable. Une telle procédure peut aussi être requise par le dispositif d'analyse quand les caractéristiques du transfert d'ondes en régime thermo élastique ne sont pas ou sont peu documentées dans la bibliothèque ou banque de données de signatures.

Dans le but d'améliorer la détection de défauts discrets par une amélioration du rapport signal-bruit en sortie du deuxième canal, la méthode selon l'invention prévoit qu'un signal ultrasonore capté via le deuxième canal fait, avant l'étape d'analyse, l'objet d'un traitement de type « Synthetic Aperture Focusing Technique » ou « SAFT ».

Afin de pouvoir mettre la méthode selon l'invention en oeuvre, l'invention propose aussi une installation selon la revendication 10. Un balayage de la zone soudée peut ainsi être réalisé en même temps que la soudure, ce qui permet d'optimiser le temps de cycle, par exemple en se déplaçant à la suite d'une tête de soudage laser. Il peut également être réalisé après soudage, par exemple dans le cas d'une soudure par étincelage.

Le deuxième canal est couplé à un récepteur sensible aux vibrations de la surface de la bande générées par les ondes ultrasonores, tel qu'un dispositif interférométrique et le deuxième canal comprend au moins un guide optique dont une extrémité collectrice d'ondes se déplace sans contact dans l'interstice compris entre les mors, selon un parcours parallèle et synchrone à celui du déplacement des ondes ultrasonores sur le côté de la première bande.

Un déplacement de la sortie du premier canal premier et de l'entrée du deuxième canal est effectué sans contact au dessus des extrémités de bande et est synchronisable avec ou retardable par rapport à une opération de soudage sur une longueur prédéfinie des extrémités.

Les impulsions sont idéalement générées par un laser pulsé de type YAG en entrée du premier canal, sont guidées via le premier canal et génèrent les ondes ultrasonores en sortie du premier canal par incidence sur la surface de la première bande.

La sortie du deuxième canal est couplée à un récepteur d'ondes ultrasonores ou du moins optiquement sensible aux vibrations de la surface de la bande produites par les ondes ultrasonores. Il est ainsi de préférence de type interféromètre « Fabry-Perot Confocal » ou de type interféromètre « PI-EMF Photo Induced - ElectroMotive Force » qui peut être couplé avec un laser continu ou à impulsions générant une référence plane.

L'axe de l'extrémité émettrice du chemin à fibres optiques de l'émetteur laser ainsi que celui de l'extrémité réceptrice du chemin à fibres optiques du récepteur interférométrique sont substantiellement perpendiculaires à la surface de la bande ou peuvent être légèrement inclinés vers la soudure

Un ensemble de sous-revendications présente également des avantages de l'invention.

Un exemple de réalisation et d'application est fourni à l'aide d'une figure décrite :

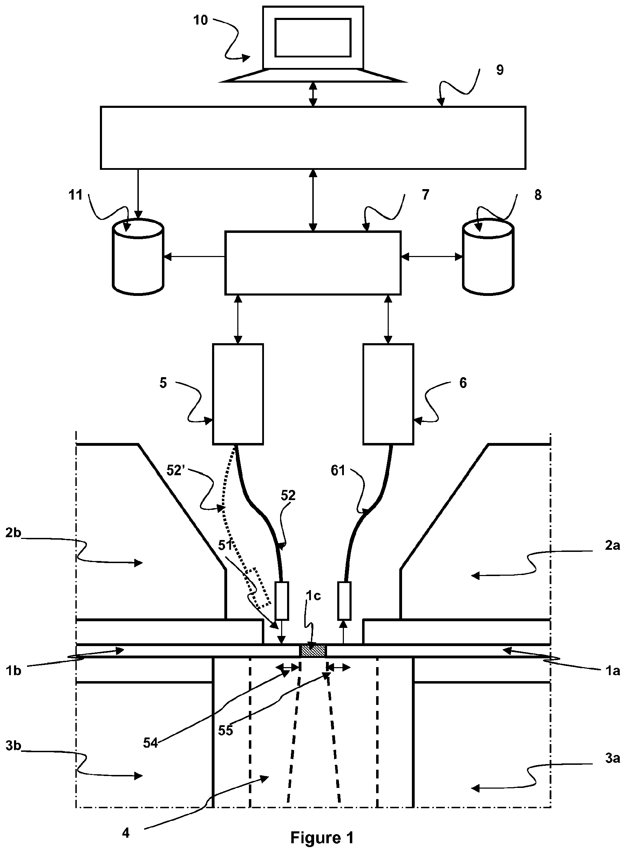

- Figure 1: Schéma d'une installation permettant la mise en oeuvre de la méthode selon l'invention dans une machine de soudage de bandes (représentée en section).

Une queue d'une première bande (1b) est serrée dans des mors de sortie (2b, 3b) d'une machine de soudage. La tête d'une deuxième bande (1a) est serrée dans des mors d'entrée (2a, 3a) de ladite machine de soudage.

Les mors d'entrée et de sortie sont en position rapprochée de soudage et les deux extrémités de bande (1a, 1b) sont réunies par une soudure (1c) à inspecter. Eventuellement, un support (4) assure un support annexe des extrémités de bandes.

Un dispositif émetteur (5), par exemple un laser pulsé YAG, transmet un faisceau laser (51) par un chemin à fibres optiques (52), en tant que premier canal décrit dans la méthode selon l'invention. L'impact du faisceau laser sur la première bande génère, par exemple en mode thermo élastique c'est-à-dire sans fusion de la bande, des ondes ultrasonores sur la surface (ici supérieure) de la première bande (1b) et qui se propagent vers/dans la soudure (1c) puis la deuxième bande (1a). Ces ondes provoquent des déplacements mécaniques normaux à la surface de la bande et qui peuvent être détectés par un dispositif interférométrique (6) par l'intermédiaire d'un chemin à fibres optiques (61), en tant que deuxième canal d'ondes optiquement influencées par un état vibratoire de la surface de la bande produit par des ondes ultrasonores. A titre optionnel, un premier canal est indiqué en pointillés sous une position (52') permettant une incidence inclinée d'un des deux chemins à fibres optiques par rapport à la bande en vis-à-vis. Le troisième canal d'ondes est matérialisé par la jonction « bande-soudure-bande » (54, 1c, 55) sur et dans laquelle se propagent les ondes. Essentiel est que le premier et le deuxième mors présentent au moins un espacement tel qu'un interstice (54, 55) est formé afin de laisser passer le premier canal (52) optiquement incident pour générer des ondes ultrasonores sur la surface de la première bande (1b) et de laisser passer un deuxième canal (61) optiquement émergent pour capter les ondes émergeant d'une surface de la deuxième bande (1a). La largeur de l'interstice (54, 55) autour de la soudure, c'est-à-dire au moins de la distance permise entre les axes du premier et du deuxième canal, est choisie de façon à être minimale en raison du rapprochement imposé par les mors et peut, si besoin, être variablement adaptée sous une largeur maximale permise par les mors, afin de mieux extraire des caractéristiques ciblées de soudure requérant des points d'incidences précis à une distance de la soudure. Une mesure de plusieurs signatures peut aussi être avantageusement envisagée selon des configurations sous des distances variables entre le premier et le deuxième canal.

Un dispositif d'analyse (7) (au moyen duquel l'étape d'analyse de la méthode selon l'invention est exécutée) reçoit des signaux générés par le dispositif interférométrique (6) via le deuxième canal et des données en provenance d'un système d'automatismes (9) contrôlant la machine de soudage. Ces données concernent, par exemple, l'épaisseur de la bande, la nuance de l'acier et tous les paramètres de soudage ainsi que les paramètres de réglage d'éventuels dispositifs de traitement thermique préalables ou postérieurs à la soudure. Il identifie au moins une donnée caractéristique du transfert d'ondes, ou signature, entre l'émetteur (5) et le récepteur (6), telles qu'une atténuation, un temps de parcours ou une transformation des ondes ou toute autre caractéristique d'anomalie ciblée/reconnaissable sur la structure bande-soudure-bande et recherche dans une bibliothèque de données (8) une possibilité d'adéquation entre ces anomalies de transfert d'ondes et un type de défaut de soudure, idéalement par reconnaissance de simple signature, voire de double signature. Il quantifie le degré de gravité du défaut et, à travers le système d'automatismes (9), il est apte à générer une alarme sur un pupitre de contrôle (10) de l'opérateur si le défaut implique que la soudure soit refaite. Il peut aussi requérir de la part de l'opérateur une prise de décision par l'intermédiaire de son pupitre (10). Le dispositif d'analyse (7) peut aussi comprendre un module de contrôle du mode (simple ou alterné) d'impulsions de l'émetteur (5) afin qu'à partir d'une étape d'analyse du régime lié aux impulsions et d'au moins une mesure de propriété des ondes ultrasonores issues du deuxième canal, des caractéristiques d'inspection de la soudure soient extraites pour une identification ciblée d'anomalie.

Dans une variante du procédé, le dispositif d'analyse (7) assure une correction des paramètres de soudage par l'intermédiaire du système d'automatismes (9) en fonction du défaut détecté. Il peut aussi conseiller ces corrections à un opérateur.

Les données analysées lors de l'occurrence d'un défaut et en provenance du système d'automatismes (9), de la bibliothèque (8), du dispositif interférométrique (6) et éventuellement du pupitre (10) de l'opérateur sont enregistrées dans une base de données (11) aux fins d'analyse des causes de génération des défauts.

La méthode selon l'invention et l'installation apte à sa mise en oeuvre permettent donc une exploration de la totalité de la soudure et pas seulement de sa surface visible. Ses capacités adaptatives d'analyse permettent de réduire de plus en plus le recours à la vigilance et à l'expérience de l'opérateur et de réduire la quantité de ressoudages non justifiés. Ils permettent aussi très avantageusement de réaliser l'inspection avec très peu de temps d'immobilisation de la bande, voire sur une durée égale à celle de la soudure si le chariotage d'au moins la sortie d'ondes du premier canal (52) et de l'entrée d'ondes du deuxième canal (61) est synchrone au déplacement d'une tête de soudage.

Enfin, il est possible de penser que l'émetteur ou/et le récepteur et les premier et deuxième canaux pourraient être des composantes électro-acoustique pour générer/capter des ondes ultrasonores autour de la structure de soudure. Toutefois, ces composantes sont trop encombrantes pour être couplable dans l'interstice imposé pas des mors (de quelques centimètres), en particulier dans le cas de bandes fines d'une épaisseur de moins de quelques centimètres. C'est pourquoi les premier et deuxième canaux sont avantageusement prévus pour un guidage optique à faible section.

## Revendications

1. Méthode d'inspection de soudure (1c) de raboutage de deux extrémités transversales de deux bandes métalliques (1a, 1b), les dites extrémités étant respectivement rapprochées et maintenues entre un premier et un deuxième mors (2a, 2b) disposés ainsi le long de chacune des extrémités transversales, dans laquelle
- le premier et le deuxième mors présentent au moins un espacement tel qu'un interstice (54, 55) est formé afin de laisser passer un premier canal (52) de transmission d'ondes incidentes aptes à générer des ondes ultrasonores sur une surface de la première bande et de laisser passer un deuxième canal (61) de transmission d'ondes émergentes en surface de la deuxième bande ;
- les ondes incidentes du premier canal sont générées au moyen d'impulsions laser sous un régime au moins prévu pour un mettre en oeuvre un troisième canal d'ondes ultrasonores générées sur la surface de la première bande, traversant la soudure et émergeant dans le deuxième canal ; le troisième canal d'ondes étant matérialisé par une jonction « bande-soudure-bande » (54, 1c, 55) sur et dans laquelle se propagent les ondes,
- à partir d'une étape d'analyse (7) du régime lié aux impulsions et d'au moins une mesure d'une signature d'un état de vibratoire de la surface de la deuxième bande à l'émergence des ondes ultrasonores dans le deuxième canal, des caractéristiques d'inspection de la soudure sont extraites pour identification, en ce que la signature d'une soudure en inspection est comparée à des signatures de mesure type de défauts de soudage répertoriées dans une banque de données.

2. Méthode selon revendication 1, pour laquelle :
les impulsions sont émises par un émetteur (5) couplé en entrée du premier du canal et les ondes du deuxième canal sont captées par un récepteur (6) couplé en sortie du deuxième canal ;
- une sortie du premier canal et une entrée du deuxième canal sont chariotées le long de l'espacement entre les deux mors en restant sans contact avec la bande, de façon à extraire les caractéristiques d'inspection de soudage sous deux configurations :
- de façon synchrone et sous un intervalle de temps le plus bref par rapport à un dispositif de soudage lui-même porté par un mécanisme charioté le long de l'espacement entre les deux mors ;
- de façon postérieure à la réalisation de la soudure complète des extrémités de chaque bande.

3. Méthode selon une des revendications 1 à 2, pour laquelle les caractéristiques d'inspection de la soudure sont déduites par une mesure d'atténuation, de temps de parcours ou de transformation d'ondes issues du deuxième canal.

4. Méthode selon une des revendications précédentes, pour laquelle selon les caractéristiques ou signatures extraites d'inspection de la soudure, des alarmes sont générées.

5. Méthode selon une des revendications précédentes, mise en oeuvre selon au moins un des modes suivants :
- Un mode d'apprentissage impliquant systématiquement un expert qui confirme ou modifie une identification et une quantification de défaut de soudure ;
- Un mode automatique dans lequel l'étape d'analyse liée aux caractéristiques d'inspection de la soudure assure autonomement une identification et une quantification d'au moins un défaut de soudure et délivre sous une tolérance prédéfinie au moins une alarme à un opérateur ;
- Un mode semi-automatique dans lequel, sous le précédent mode automatique, si des caractéristiques de transfert d'ondes ultrasonores sont sujettes à être insuffisamment identifiables, une requête de décision sur l'inspection additionnelle est envoyée auprès d'un opérateur.

6. Méthode selon une des revendications précédentes 1 à 4, mise en oeuvre selon au moins un des modes suivants :
- Un mode d'apprentissage impliquant systématiquement un expert qui, à partir d'une identification et d'une quantification d'un défaut de soudage, corrige des paramètres de soudage pertinents, tels que la vitesse de déplacement d'une tête de soudage ou une énergie de soudage afin de corriger ledit défaut ;
- Un mode automatique dans lequel l'étape d'analyse liée aux caractéristiques d'inspection de la soudure assure autonomement une correction de paramètres de soudage à partir d'une identification et d'une quantification de défaut de soudage ;
- Un mode semi-automatique dans lequel, sous le précédent mode automatique, l'étape d'analyse émet une requête de correction de paramètres de soudage à un opérateur à partir de l'identification et la quantification de défaut de soudage.

7. Méthode selon une des revendications précédentes, pour laquelle en vue d'étapes d'analyse à postériori d'une étape d'inspection, des défauts identifiés et quantifiés sont enregistrés dans une base de données, communément et pour chaque soudure défectueuse, avec des paramètres de soudage mis en oeuvre et des données concernant les bandes soudées.

8. Méthode selon une des revendications précédentes, pour laquelle les ondes ultrasonores sur une surface de la première bande sont générées par un laser à impulsions sous au moins un des deux régimes suivants :
- un régime thermo élastique ;
- un régime thermo élastique alterné par un régime par ablation, ladite alternance étant en particulier déterminée par l'étape d'analyse, en cas d'anomalie, en vue d'un éventuel complément d'analyse des caractéristiques liées à un transfert d'ondes.

9. Méthode selon une des revendications précédentes, pour laquelle un signal ultrasonore capté via le deuxième canal fait, avant l'étape d'analyse, l'objet d'un traitement de type « Synthetic Aperture Focusing Technique » ou « SAFT ».

10. Installation de contrôle non destructif de soudures (1c) de deux extrémités de bande (1a, 1b) apte à la mise en oeuvre de la méthode selon revendications 1 à 9, comprenant un premier mors d'entrée (2a), un deuxième mors de sortie (2b), un émetteur (5) et un récepteur (6) d'ondes ultrasonores, les dites extrémités étant réunies par les deux mors d'entrée et de sortie (2a, 2b) d'une machine de soudage, dans l'installation le premier et le deuxième mors présentent au moins un espacement tel qu'un interstice (54, 55) formé afin de laisser passer un premier canal (52) d'ondes ultrasonores émise par l'émetteur (5) sur la surface de la première bande (1b) et de laisser passer un deuxième canal (61) pour capter des ondes ultrasonores émergeant d'une surface de la deuxième bande (1a) vers le récepteur (6), au moins un des deux premier ou deuxième canaux d'ondes ultrasonores comprend au moins un guide optique, idéalement comprenant une/des fibre(s) optique(s) ou un collimateur/focalisateur, configuré pour se déplacer sans contact au dessus de la surface aux extrémités de bande, parallèlement à un chemin de soudure, et comprenant un dispositif d'analyse (7) recevant des signaux générés par le récepteur (6) via le deuxième canal.

11. Installation selon revendication 10, pour laquelle le deuxième canal est couplé au récepteur (6) sensible aux ondes ultrasonores, tel qu'un dispositif interférométrique et le deuxième canal comprend au moins un guide optique dont une extrémité collectrice d'ondes se déplace sans contact dans l'interstice compris entre les mors, selon un parcours parallèle et synchrone à celui du déplacement des ondes ultrasonores sur la surface de la première bande.

12. Installation selon une des revendications 10 à 11, pour laquelle un déplacement de la sortie du premier canal premier et de l'entrée du deuxième canal est effectué sans contact au dessus de la surface aux extrémités de bande et est synchronisable avec ou retardable par rapport à une opération de soudage sur une longueur prédéfinie des extrémités.

13. Installation selon une des revendications 10 à 12, pour laquelle les impulsions sont générées par un laser pulsé de type YAG, sont guidées via le premier canal et génère les ondes ultrasonores en sortie du premier canal sur le côté de la première bande.

14. Installation selon une des revendications 10 à 13, pour laquelle une sortie du deuxième canal est couplée à un récepteur d'ondes ultrasonores de type interféromètre « Fabry-Perot Confocal » ou de type interféromètre « PI-EMF Photo Induced - ElectroMotive Force ».

## Patentansprüche

1. Verfahren zur Prüfung der Schweißnaht (1c) einer Stumpfstoßverbindung von zwei Querenden von zwei Metallbändern (1a, 1b), wobei die Enden je angenähert und zwischen einer ersten und einer zweiten Klemmbacke (2a, 2b) gehalten werden, die so entlang jedes der Querenden angeordnet sind, wobei
- die erste und die zweite Klemmbacke mindestens einen derartigen Abstand aufweisen, dass ein Zwischenraum (54, 55) gebildet wird, um einen ersten Übertragungskanal (52) von einfallenden Wellen durchzulassen, die Ultraschallwellen auf einer Fläche des ersten Bands erzeugen können, und einen zweiten Übertragungskanal (61) von an der Oberfläche des zweiten Bands austretenden Wellen durchzulassen;
- die einfallenden Wellen des ersten Kanals mittels Laserimpulsen in mindestens einer Betriebsart erzeugt werden, die vorgesehen ist, um einen dritten Kanal von Ultraschallwellen anzuwenden, die auf der Oberfläche des ersten Bands erzeugt werden, die Schweißnaht durchqueren und in den zweiten Kanal austreten; wobei der dritte Kanal von einer Verbindung «Band-Schweißnaht-Band» (54, 1c, 55) hergestellt wird, auf und in der sich die Wellen fortpflanzen,
- ausgehend von einem Analyseschritt (7) der mit den Impulsen verbundenen Betriebsart und mindestens einer Messung einer Signatur eines Schwingungszustands der Oberfläche des zweiten Bands beim Austreten der Ultraschallwellen in den zweiten Kanal, Prüfmerkmale der Schweißnaht zur Identifizierung entnommen werden, dass die Signatur einer geprüften Schweißnaht mit typischen Messsignaturen von Schweißfehlern verglichen wird, die in einer Datenbank aufgelistet sind.

2. Verfahren nach Anspruch 1, wobei:
- die Impulse von einem Emitter (5) emittiert werden, der am Eingang des ersten Kanals gekoppelt ist, und die Wellen des zweiten Kanals von einem Empfänger (6) aufgefangen werden, der am Ausgang des zweiten Kanals gekoppelt ist;
- ein Ausgang des ersten Kanals und ein Eingang des zweiten Kanals entlang des Abstands zwischen den zwei Klemmbacken längs vorgeschoben werden, indem sie ohne Kontakt mit dem Band bleiben, um die Schweißnaht-Prüfmerkmale in zwei Konfigurationen zu entnehmen:
- synchron und im kürzestmöglichen Zeitintervall bezüglich einer Schweißvorrichtung, die selbst von einem Mechanismus getragen wird, der entlang des Abstands zwischen den zwei Klemmbacken längs vorgeschoben wird;
- nach der Herstellung der vollständigen Schweißung der Enden jedes Bands.

3. Verfahren nach einem der Ansprüche 1 bis 2, wobei die Prüfmerkmale der Schweißnaht durch eine Messung der Dämpfung, der Durchlaufzeit oder der Umwandlung von vom zweiten Kanal stammenden Wellen abgeleitet werden.

4. Verfahren nach einem der vorhergehenden Ansprüche, wobei gemäß den entnommenen Prüfmerkmalen oder -signaturen der Schweißnaht Warnmeldungen erzeugt werden.

5. Verfahren nach einem der vorhergehenden Ansprüche, das gemäß mindestens einem der folgenden Modi angewendet wird:
- einem Lernmodus, der systematisch einen Experten impliziert, der eine Identifizierung oder Quantifizierung eines Fehlers der Schweißnaht bestätigt oder modifiziert;
- einen automatischen Modus, bei dem der mit den Prüfmerkmalen der Schweißnaht verbundene Analyseschritt autonom eine Identifizierung und eine Quantifizierung mindestens eines Schweißfehlers gewährleistet und unter einer vorab definierten Toleranz mindestens eine Warnmeldung an einen Bediener liefert;
- einen halbautomatischen Modus, bei dem im vorhergehenden automatischen Modus, falls Übertragungsmerkmale von Ultraschallwellen dazu neigen, unzureichend identifizierbar zu sein, eine Entscheidungsanforderung über die zusätzliche Prüfung an einen Operator gesendet wird.

6. Verfahren nach einem der vorhergehenden Ansprüche 1 bis 4, das gemäß mindestens einem der nachfolgenden Modi angewendet wird:
- einem Lernmodus, der systematisch einen Experten impliziert, der ausgehend von einer Identifizierung und einer Quantifizierung eines Schweißfehlers relevante Schweißparameter korrigiert, wie die Verschiebegeschwindigkeit eines Schweißkopfs oder eine Schweißenergie, um den Fehler zu beheben;
- einem automatischen Modus, bei dem der mit den Prüfmerkmalen der Schweißnaht verbundene Analyseschritt autonom eine Korrektur von Schweißparametern ausgehend von einer Identifizierung und einer Quantifizierung eines Schweißfehlers gewährleistet;
- einem halbautomatischen Modus, bei dem im vorhergehenden automatischen Modus der Analyseschritt eine Korrekturanforderung von Schweißparametern an einen Operator ausgehend von der Identifizierung und der Quantifizierung eines Schweißfehlers sendet.

7. Verfahren nach einem der vorhergehenden Ansprüche, wobei zum Zweck von Analyseeschritten nach einem Prüfschritt identifizierte und quantifizierte Fehler in einer Datenbank gespeichert werden, gemeinsam und für jede fehlerhafte Schweißnaht, mit angewendeten Schweißparametern und Daten betreffend die geschweißten Bänder.

8. Verfahren nach einem der vorhergehenden Ansprüche, wobei die Ultraschallwellen auf einer Oberfläche des ersten Bands von einem Impulslaser in mindestens einer der zwei folgenden Betriebsarten erzeugt werden:
- einer thermoelastischen Betriebsart;
- einer thermoelastischen Betriebsart abwechselnd mit einer Ablations-Betriebsart, wobei die Wechselfolge im Fall einer Anomalie insbesondere durch den Analyseschritt bestimmt wird, im Hinblick auf eine mögliche Analyseergänzung der mit einer Wellenübertragung verbundenen Merkmale.

9. Verfahren nach einem der vorhergehenden Ansprüche, wobei ein über den zweiten Kanal aufgefangenes Ultraschallsignal vor dem Analyseschritt Gegenstand einer Verarbeitung der Art «Synthetic Aperture Focusing Technique» oder «SAFT» ist.

10. Anlage zur zerstörungsfreien Kontrolle von Schweißnähten (1c) von zwei Bandenden (1a, 1b), die für die Durchführung des Verfahrens nach den Ansprüchen 1 bis 9 geeignet ist, die eine erste Eingangs-Klemmbacke (2a), eine zweite Ausgangs-Klemmbacke (2b), einen Emitter (5) und einen Empfänger (6) von Ultraschallwellen enthält, wobei die Enden durch die zwei Eingangs- und Ausgangs-Klemmbacken (2a, 2b) einer Schweißmaschine in der Anlage vereint werden, die erste und die zweite Klemmbacke mindestens einen Abstand wie einen Zwischenraum (54, 55) aufweisen, der geformt wird, um einen ersten Kanal (52) von Ultraschallwellen durchzulassen, die vom Emitter (5) auf die Oberfläche des ersten Bands (1b) emittiert werden, und einen zweiten Kanal (61) durchzulassen, um Ultraschallwellen aufzufangen, die aus einer Oberfläche des zweiten Bands (1a) zum Empfänger (6) austreten, wobei mindestens einer der zwei ersten oder zweiten Kanäle von Ultraschallwellen mindestens einen Lichtleiter enthält, der idealerweise eine Lichtleitfaser oder Lichtleitfasern oder einen Kollimator/Fokussierer enthält, konfiguriert, sich kontaktlos oberhalb der Oberfläche an den Bandenden parallel zu einem Schweißpfad zu verschieben, und eine Analysevorrichtung (7) enthält, die vom Empfänger (6) erzeugte Signale über den zweiten Kanal empfängt.

11. Anlage nach Anspruch 10, wobei der zweite Kanal mit dem für Ultraschallwellen empfindlichen Empfänger (6) wie einer interferometrischen Vorrichtung gekoppelt ist, und der zweite Kanal mindestens einen Lichtleiter enthält, von dem ein Wellensammelende sich kontaktlos im Zwischenraum zwischen den Klemmbacken gemäß einer Strecke parallel und synchron zu derjenigen der Verschiebung der Ultraschallwellen an der Oberfläche des ersten Bands verschiebt.

12. Anlage nach einem der Ansprüche 10 bis 11, wobei eine Verschiebung des Ausgangs des ersten Kanals und des Eingangs des zweiten Kanals kontaktlos oberhalb der Oberfläche an den Bandenden durchgeführt wird und mit einem Schweißvorgang über eine vordefinierte Länge der Enden synchronisiert oder bezüglich dessen verzögert werden kann.

13. Anlage nach einem der Ansprüche 10 bis 12, wobei die Impulse von einem gepulsten Laser der Art YAG erzeugt werden, über den ersten Kanal geleitet werden und die Ultraschallwellen am Ausgang des ersten Kanals auf der Seite des ersten Bands erzeugen.

14. Anlage nach einem der Ansprüche 10 bis 13, wobei ein Ausgang des zweiten Kanals mit einem Empfänger von Ultraschallwellen der Art Interferometer «Fabry-Perot Confocal» oder der Art Interferometer «PI-EMF Photo Induced - ElectroMotive Force» gekoppelt ist.

## Claims

1. Method for inspecting the butt weld (1c) of two transverse ends of two metal strips (1a, 1b), said ends respectively being moved closer and held between first and second jaws (2a, 2b) thus placed along each of the transverse ends,
wherein
- the first and second jaws have at least a spacing such that a gap (54, 55) is formed in order to let pass a first channel (52) of transmission of incident waves able to generate ultrasonic waves on a surface of the first strip and to let pass a second channel (61) of transmission of waves emerging from the surface of the second strip;
- the incident waves of the first channel are generated by means of laser pulses in a regime at least provided to achieve a third channel of ultrasonic waves generated on the surface of the first strip, passing through the weld and emerging into the second channel; the third wave channel being embodied by a "strip-weld-strip" junction (54, 1c, 55) on and in which the waves propagate; and
- on the basis of a step (7) of analysing the regime associated with the pulses and of at least one measurement of a signature of a vibratory state of the surface of the second strip at the point where the ultrasonic waves emerge into the second channel, inspection characteristics of the weld are extracted for identification, the signature of a weld under inspection being compared to standard measurement signatures of welding defects indexed in a databank.

2. Method according to Claim 1, wherein:
the pulses are emitted by an emitter (5) that is coupled to the entrance of the first of the channels and the waves of the second channel are captured by a receiver (6) that is coupled to the exit of the second channel;
- an exit of the first channel and an entrance of the second channel are moved by way of a stage along the space between the two jaws while remaining out of contact with the strip, so as to allow the weld-inspection characteristics to be extracted in two configurations:
- synchronously and with the briefest time interval with respect to a welding device itself borne by a mechanism that is moved by way of a stage along the space between the two jaws;
- subsequently to the production of the complete weld of the ends of each strip.

3. Method according to one of Claims 1 to 2, wherein the inspection characteristics of the weld are deduced from a measurement of attenuation, of transit time or of the transformation of waves issued from the second channel.

4. Method according to one of the preceding claims, wherein, depending on the extracted inspection characteristics or signatures of the weld, alarms are generated.

5. Method according to one of the preceding claims, implemented according to at least one of the following modes:
- a learning mode systematically involving an expert that confirms or modifies a weld-defect identification and quantification;
- an automatic mode in which the analysing step associated with the inspection characteristics of the weld autonomously ensures an identification and quantification of at least one weld defect and delivers with a predefined tolerance at least one alarm to an operator;
- a semi-automatic mode in which, under the preceding automatic mode, if ultrasonic-wave transfer characteristics are found to be insufficiently identifiable, a request for a decision to be made on the basis of additional inspection is sent to an operator.

6. Method according to one of Claims 1 to 4 above, implemented according to at least one of the following modes:
- a learning mode systematically involving an expert who, on the basis of an identification and quantification of a weld defect, corrects relevant welding parameters, such as the speed of movement of a welding head or a welding energy in order to correct said defect;
- an automatic mode in which the analysing step associated with the inspection characteristics of the weld autonomously ensures a correction of welding parameters on the basis of a weld-defect identification and quantification;
- a semi-automatic mode in which, under the preceding automatic mode, the analysing step sends a request for correction of welding parameters to an operator, on the basis of the weld-defect identification and quantification.

7. Method according to one of the preceding claims, wherein, with a view to *a postiori* steps of analysing an inspection step, identified and quantified defects are recorded in a database, jointly and for each defective weld, with the welding parameters implemented and data relating to the welded strips.

8. Method according to one of the preceding claims, wherein the ultrasonic waves on a surface of the first strip are generated by a pulsed laser in at least one of the two following regimes:
- a thermoelastic regime;
- a thermoelastic regime alternated with an ablation regime, said alternation in particular being determined by the analysing step, in case of anomaly, with a view to optional complementary analysis of the characteristics associated with a wave transfer.

9. Method according to one of the preceding claims, wherein an ultrasonic signal captured via the second channel is, before the analysing step, the subject of processing of the synthetic-aperture-focusing-technique (SAFT) type.

10. Apparatus for nondestructively inspecting welds (1c) of two ends of strip (1a, 1b) and able to implement the method according to Claims 1 to 9, comprising a first entrance jaw (2a), a second exit jaw (2b), an emitter (5) and a receiver (6) of ultrasonic waves, said ends being brought together by the two, entrance and exit, jaws (2a, 2b) of a welding machine, in the apparatus, the first and second jaws having at least a spacing such that a gap (54, 55) is formed in order to let pass a first channel (52) of ultrasonic waves emitted by the emitter (5) to the surface of the first strip (1b) and to let pass a second channel (61) in order to allow the ultrasonic waves emerging from a surface of the second strip (1a) to be captured by the receiver (6), at least one of the two, first or second, ultrasonic-wave channels comprises at least one optical guide, ideally comprising one or more optical fibres or a collimator/focuser that is configured to move, without contact, above the surface at the strip ends, parallelly to a welding path, and comprising an analysing device (7) that receives the signals generated by the receiver (6) via the second channel.

11. Apparatus according to Claim 10, wherein the second channel is coupled to the receiver (6) able to sense the ultrasonic waves, such as an interferometric device, and the second channel comprises at least one optical guide a wave-collecting end of which is moved without contact in the gap comprised between the jaws, along a course that is parallel to and synchronous with that of the movement of the ultrasonic waves over the surface of the first strip.

12. Apparatus according to one of Claims 10 to 11, wherein a movement of the exit of the first channel first and the entrance of the second channel is generated without contact above the surface at the strip ends and is synchronizable with or delayable with respect to a welding operation over a predefined length of the ends.

13. Apparatus according to one of Claims 10 to 12, wherein the pulses are generated by a pulsed YAG laser, are guided via the first channel and generate the ultrasonic waves, after exiting the first channel, on the first-strip side.

14. Apparatus according to one of Claims 10 to 13, wherein an exit of the second channel is coupled to an ultrasonic-wave receiver that is a confocal Fabry-Perot interferometer or an interferometer of the photoinduced-electromotive-force (PI-EMF) type.
